# EUROPÄISCHE PATENTSCHRIFT

(11) **EP 2 989 153 B1**
(45) Veröffentlichungstag und Bekanntmachung des Hinweises auf die Patenterteilung: **10.05.2017**
(21) Anmeldenummer: 14717765.3
(22) Anmeldetag: 15.04.2014
(51) Int. Cl.: C08K 5/1515, C08K 5/3492, C08K 5/5313, C08L 67/02

(54) **SPANNUNGSRISSBESTÄNDIGE HALOGENFREI FLAMMGESCHÜTZTE POLYESTER**
HALOGEN-FREE, FLAME-RESISTANT POLYESTERS WHICH ARE RESISTANT TO STRESS FRACTURES
POLYESTER IGNIFUGE SANS HALOGÈNE RÉSISTANT AUX FISSURES DE CONTRAINTE

(30) Priorität: 25.04.2013 EP 13165283
(43) Veröffentlichungstag der Anmeldung: 02.03.2016
(73) Patentinhaber: BASF SE, 67056 Ludwigshafen am Rhein (DE)
(72) Erfinder: ROTH, Michael, 64686 Lautertal (DE); USKE, Klaus, 67098 Bad Dürkheim (DE); WAGNER, Sebastian, 67067 Ludwigshafen (DE); WOLF, Ulli, 67551 Worms (DE)
(74) Vertreter: BASF IP Association
(86) Internationale Anmeldenummer: PCT/EP2014/057577
(87) Internationale Veröffentlichungsnummer: WO 2014/173726

(56) Entgegenhaltungen:
- EP-A1- 1 634 915
- EP-A1- 2 184 312
- EP-A2- 1 935 944
- WO-A1-2004/069912
- US-A- 4 391 938
- DATABASE WPI Week 198931 Thomson Scientific, London, GB; AN 1989-225712 XP002716962, -& JP H01 163259 A (TOYOBO KK) 27. Juni 1989 (1989-06-27)

## Beschreibung

Die Erfindung betrifft die Verwendung von Polyesterformmassen, aufgebaut aus
A) 20 bis 97,9 Gew.-% eines thermoplastischen Polyesters,
B) 0,1 bis 10 Gew.-% eines epoxidierten natürlichen Öls oder Fettsäureester oder deren Mischungen, wobei die Komponente B) ein Epoxid-Äquivalentgewicht gemäß DIN EN ISO 3001 von 100 bis 400 g/Eq. aufweist,
C) 1 bis 20 Gew.-% eines Metallsalzes einer Phosphinsäure,
D) 1 bis 20 Gew.-% einer Melaminverbindung,
E) 0 bis 60 Gew.-% weiterer Zusatzstoffe,
wobei die Summe der Gewichtsprozente der Komponenten A) bis E) 100 % ergibt, zur Herstellung von spannungsrissbeständigen und halogenfreien flammgeschützten Polyesterformmassen.

Darüber hinaus betrifft die Erfindung die gemäß der erfindungsgemäßen Verwendung erhältlichen Formteile jeglicher Art.

Thermoplastische Polyester werden aufgrund ihrer Dimensionsstabilität seit langem als Werkstoffe eingesetzt. Neben ihren mechanischen, thermischen, elektrischen und chemischen Eigenschaften gewinnen zunehmend Eigenschaften wie Hydrolysestabilität und Resistenz gegenüber Laugen an Bedeutung. Beispiele hierfür sind Anwendungen im Elektronikbereich (z.B. Abdeckungen für Schutzschalter) und Automobilbereich (z.B. Stecker, Sensoren, Gehäuseteile). Bei den genannten Anwendungen ist eine verbesserte Stabilität bei Lagerungen in basischer Umgebung bzw. in feucht warmem Klima gefordert.

Darüber hinaus besteht ein zunehmendes Marktinteresse an halogenfrei flammgeschützten Polyesterformmassen. Hierbei sind die wesentlichen Anforderungen an das Flammschutzmittel eine helle Eigenfarbe, eine ausreichende Temperaturstabilität während der Polymerverarbeitung, sowie eine flammhemmende Wirksamkeit in verstärktem und unverstärktem Polymer. Flammgeschützte thermoplastische Polyesterformmassen besitzen jedoch in der Regel eine reduzierte Hydrolysebeständigkeit, da einerseits der Anteil an Polymermatrix reduziert ist und es andererseits auch zu negativen Wechselwirkungen zwischen Wasser, Flammschutzmittel und Polymermatrix kommen kann.

Gemäß dem Stand der Technik führt die Verwendung von (Poly)Carbodiimiden (EP-A-794 974) oder von (Poly)Epoxyverbindungen (DE T1 69231831) zwar zu einer Verbesserung der Schmelzestabilität, jedoch weisen die beschriebenen Polyester-Zusammensetzungen Verarbeitungsnachteile auf, insbesondere durch Molekulargewichtsaufbau und eine daraus resultierende hohe Schmelzviskosität.

Aus der WO2004/069912 und WO2006/120184 sowie US73751671 sind Polyesterformmassen mit epoxidierten natürlichen Ölen bekannt, jedoch werden diese Additive für die Hydrolysestabilität eingesetzt. Eine flammgeschützte spannungsrissbeständige Polyesterzusammensetzung geht aus den Lehren der WO2004/069912 und WO2006/120184 nicht hervor.

Aus JP01/221448 ist bekannt, dass halogenhaltige flammgeschützte Polyesterformmassen durch Zusatz von Epoxy-Verbindungen und Polyolefinen hydrolysestabilisiert werden können.

Aufgabe der vorliegenden Erfindung war es daher, Polyesterformmassen und/oder Formkörper zur Verfügung zu stellen, welche eine erhöhte Spannungsrissbeständigkeit , insbesondere gegenüber Laugen, aufweisen und gleichzeitig halogenfrei flammgeschützt ausgerüstet sind.

Demgemäß wurden die eingangs definierten Verwendungen gefunden. Bevorzugte Ausführungsformen sind den Unteransprüchen zu entnehmen.

Überraschenderweise wurde gefunden, dass die Verwendung von epoxidierten natürlichen Ölen und/oder Fettsäureestern zur Herstellung von halogenfrei flammgeschützten Polyesterformmassen geeignet ist, die eine ausgezeichnete Spannungsrissbeständigkeit aufweisen. Gleichzeitig entsprechen Flammschutzeigenschaften, Hydrolysebeständigkeit und elektrische Eigenschaften dem Anforderungsprofil für genannte Anwendungen, insbesondere im Elektro- und Elektronik-Bereich.

Als Komponente A) enthalten die erfindungsgemäß verwendbaren Formmassen 20 bis 97,9, bevorzugt 30 bis 97, und insbesondere 35 bis 88 Gew.-% mindestens eines thermoplastischen Polyesters.

Allgemein werden Polyester A) auf Basis von aromatischen Dicarbonsäuren und einer aliphatischen oder aromatischen Dihydroxyverbindung verwendet.

Eine erste Gruppe bevorzugter Polyester sind Polyalkylenterephthalate, insbesondere solche mit 2 bis 10 C-Atomen im Alkoholteil.

Derartige Polyalkylenterephthalate sind an sich bekannt und in der Literatur beschrieben.
Sie enthalten einen aromatischen Ring in der Hauptkette, der von der aromatischen Dicarbonsäure stammt. Der aromatische Ring kann auch substituiert sein, z.B. durch Halogen wie Chlor und Brom oder durch C₁-C₄-Alkylgruppen wie Methyl-, Ethyl-, i- bzw. n-Propyl- und n-, i- bzw. t-Butylgruppen.

Diese Polyalkylenterephthalate können durch Umsetzung von aromatischen Dicarbonsäuren, deren Estern oder anderen esterbildenden Derivaten mit aliphatischen Dihydroxyverbindungen in an sich bekannter Weise hergestellt werden.

Als bevorzugte Dicarbonsäuren sind 2,6-Naphthalindicarbonsäure, Terephthalsäure und Isophthalsäure oder deren Mischungen zu nennen. Bis zu 30 mol-%, vorzugsweise nicht mehr als 10 mol-% der aromatischen Dicarbonsäuren können durch aliphatische oder cycloaliphatische Dicarbonsäuren wie Adipinsäure, Azelainsäure, Sebacinsäure, Dodecandisäuren und Cyclohexandicarbonsäuren ersetzt werden.

Von den aliphatischen Dihydroxyverbindungen werden Diole mit 2 bis 6 Kohlenstoffatomen, insbesondere 1,2-Ethandiol, 1,3-Propandiol, 1,4-Butandiol, 1,6-Hexandiol, 1,4-Hexandiol, 1,4-Cyclohexandiol, 1,4-Cyclohexandimethanol und Neopentylglykol oder deren Mischungen bevorzugt.

Als besonders bevorzugte Polyester A) sind Polyalkylenterephthalate, die sich von Alkandiolen mit 2 bis 6 C-Atomen ableiten, zu nennen. Von diesen werden insbesondere Polyethylenterephthalat, Polypropylenterephthalat und Polybutylenterephthalat oder deren Mischungen bevorzugt. Weiterhin bevorzugt sind PET und/oder PBT, welche bis zu 1 Gew.-%, vorzugsweise bis zu 0,75 Gew.-% 1,6-Hexandiol und/oder 2-Methyl-1,5-Pentandiol als weitere Monomereinheiten enthalten.

Die Viskositätszahl der Polyester (A) liegt im allgemeinen im Bereich von 50 bis 220, vorzugsweise von 80 bis 160 ml/g (gemessen in einer 0,5 gew.-%igen Lösung in einem Phenol/o-Dichlorbenzolgemisch (Gew.-Verh. 1:1 bei 25°C)) gemäß ISO 1628.

Insbesondere bevorzugt sind Polyester, deren Carboxylendgruppengehalt bis zu 100 mval/kg, bevorzugt bis zu 50 mval/kg und insbesondere bis zu 40 mval/kg Polyester beträgt. Derartige Polyester können beispielsweise nach dem Verfahren der DE-A 44 01 055 hergestellt werden. Der Carboxylendgruppengehalt wird üblicherweise durch Titrationsverfahren (z.B. Potentiometrie) bestimmt.

Insbesondere bevorzugte Formmassen enthalten als Komponente A) eine Mischung aus Polyestern, welche verschieden von PBT sind, wie beispielsweise Polyethylenterephthalat (PET). Der Anteil z.B. des Polyethylenterephthalates beträgt vorzugsweise in der Mischung bis zu 50, insbesondere 1,0 bis 35 Gew.-%, bezogen auf 100 Gew.-% A).

Weiterhin ist es vorteilhaft PET Rezyklate (auch scrap-PET genannt) gegebenenfalls in Mischung mit Polyalkylenterephthalaten wie PBT einzusetzen.

Unter Rezyklaten versteht man im Allgemeinen:
1) sog. Post Industrial Rezyklat: hierbei handelt es sich um Produktionsabfälle bei der Polykondensation oder bei der Verarbeitung z.B. Angüsse bei der Spritzgussverarbeitung, Anfahrware bei der Spritzgussverarbeitung oder Extrusion oder Randabschnitte von extrudierten Platten oder Folien.
2) Post Consumer Rezyklat: hierbei handelt es sich um Kunststoffartikel, die nach der Nutzung durch den Endverbraucher gesammelt und aufbereitet werden. Der mengenmäßig bei weitem dominierende Artikel sind blasgeformte PET Flaschen für Mineralwasser, Softdrinks und Säfte.

Beide Arten von Rezyklat können entweder als Mahlgut oder in Form von Granulat vorliegen. Im letzteren Fall werden die Rohrezyklate nach der Auftrennung und Reinigung in einem Extruder aufgeschmolzen und granuliert. Hierdurch wird meist das Handling, die Rieselfähigkeit und die Dosierbarkeit für weitere Verarbeitungsschritte erleichtert.

Sowohl granulierte als auch als Mahlgut vorliegende Rezyklate können zum Einsatz kommen, wobei die maximale Kantenlänge 10 mm, vorzugsweise kleiner 8 mm betragen sollte.

Aufgrund der hydrolytischen Spaltung von Polyestern bei der Verarbeitung (durch Feuchtigkeitsspuren) empfiehlt es sich, das Rezyklat vorzutrocknen. Der Restfeuchtegehalt nach der Trocknung beträgt vorzugsweise <0,2 %, insbesondere <0,05 %.

Als weitere Gruppe sind voll aromatische Polyester zu nennen, die sich von aromatischen Dicarbonsäuren und aromatischen Dihydroxyverbindungen ableiten.

Als aromatische Dicarbonsäuren eignen sich die bereits bei den Polyalkylenterephthalaten beschriebenen Verbindungen. Bevorzugt werden Mischungen aus 5 bis 100 mol-% Isophthalsäure und 0 bis 95 mol-% Terephthalsäure, insbesondere Mischungen von etwa 80 % Terephthalsäure mit 20 % Isophthalsäure bis etwa äquivalente Mischungen dieser beiden Säuren verwendet.

Die aromatischen Dihydroxyverbindungen haben vorzugsweise die allgemeine Formel 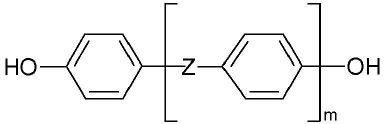 in der Z eine Alkylen- oder Cycloalkylengruppe mit bis zu 8 C-Atomen, eine Arylengruppe mit bis zu 12 C-Atomen, eine Carbonylgruppe, eine Sulfonylgruppe, ein Sauerstoff- oder Schwefelatom oder eine chemische Bindung darstellt und in der m den Wert 0 bis 2 hat. Die Verbindungen können an den Phenylengruppen auch C₁-C₆-Alkyl- oder Alkoxygruppen und Fluor, Chlor oder Brom als Substituenten tragen.

### Als Stammkörper dieser Verbindungen seien beispielsweise

Dihydroxydiphenyl,
Di-(hydroxyphenyl)alkan,
Di-(hydroxyphenyl)cycloalkan,
Di-(hydroxyphenyl)sulfid,
Di-(hydroxyphenyl)ether,
Di-(hydroxyphenyl)keton,
Di-(hydroxyphenyl)sulfoxid,
α,α'-Di-(hydroxyphenyl)-dialkylbenzol,
Di-(hydroxyphenyl)sulfon, Di-(hydroxybenzoyl)benzol

Resorcin und Hydrochinon sowie deren kernalkylierte oder kernhalogenierte Derivate genannt.

### Von diesen werden

4,4'-Dihydroxydiphenyl,
2,4-Di-(4'-hydroxyphenyl)-2-methylbutan
α,α,'-Di-(4-hydroxyphenyl)-p-diisopropylbenzol,
2,2-Di-(3'-methyl-4'-hydroxyphenyl)propan und
2,2-Di-(3'-chlor-4'-hydroxyphenyl)propan,
sowie insbesondere
2,2-Di-(4'-hydroxyphenyl)propan
2,2-Di-(3',5-dichlordihydroxyphenyl)propan,
1,1-Di-(4'-hydroxyphenyl)cyclohexan,
3,4'-Dihydroxybenzophenon,
4,4'-Dihydroxydiphenylsulfon und
2,2-Di(3',5'-dimethyl-4'-hydroxyphenyl)propan
oder deren Mischungen bevorzugt.

Selbstverständlich kann man auch Mischungen von Polyalkylenterephthalaten und vollaromatischen Polyestern einsetzen. Diese enthalten im allgemeinen 20 bis 98 Gew.-% des Polyalkylenterephthalates und 2 bis 80 Gew.-% des vollaromatischen Polyesters.

Selbstverständlich können auch Polyesterblockcopolymere wie Copolyetherester verwendet werden. Derartige Produkte sind an sich bekannt und in der Literatur, z.B. in der US A 3651014, beschrieben. Auch im Handel sind entsprechende Produkte erhältlich, z.B. Hytrel® (DuPont).

Als Komponente B) enthalten die erfindungsgemäß verwendbaren Formmassen 0,1 bis 10, vorzugsweise 0,5 bis 7 und insbesondere 1 bis 5 Gew.-% epoxidierte natürliche Öle oder epoxidierte Fettsäureester oder deren Mischungen mit einem Epoxid-Äquivalentgewicht (EEW) gemäß DIN EN ISO 3001 (1999-11) von 100 bis 400 g/Eq., insbesondere von 125 bis 375, bevorzugt 150 bis 250 g/Eq. (EEW gibt den pro Epoxidgruppe verbundenen Festkörper des betreffenden Stoffes in g an, siehe auch Römpp-Online, 2013)

Bevorzugt werden als Komponente B) solche epoxidierten Verbindungen eingesetzt, deren Epoxidgruppen nicht terminal gebunden sind (sogenannte "interne" in der Kohlenwasserstoffkette befindliche Epoxidgruppen).

Der Gehalt an Epoxidgruppen beträgt vorzugsweise von 1 bis 20, bevorzugt von 4 bis 15 und insbesondere von 6 bis 12 Gew.-%, bezogen auf die jeweilige Komponente B).

Bevorzugte natürliche Öle sind Olivenöl, Leinöl, Palmöl, Erdnussöl, Kokosnussöl, Tungöl, Rüböl, Ricinusöl, Lebertran oder deren Mischungen, wobei Sojabohnenöl und Leinöl besonders bevorzugt sind.

Das Molekulargewicht derartiger Öle beträgt vorzugsweise von 500 bis 1500, insbesondere von 600 bis 1100. Derartige Lein- oder Sojabohnenöle sind Gemische von Trifettsäureglyzeriden, wobei der C₁₈-Carbonsäureanteil überwiegt.

Die epoxidierten Fettsäureester sind im allgemeinen aus diesen natürlichen Ölen herstellbar, nach dem Fachmann geläufigen Methoden.

Bevorzugt werden Ester gesättigter oder ungesättigter aliphatischer Carbonsäuren mit 10 bis 40, bevorzugt 16 bis 22 C-Atomen mit aliphatischen gesättigten Alkoholen mit 2 bis 40, vorzugsweise 2 bis 6 C-Atomen eingesetzt.

Die Carbonsäuren können 1- oder 2-wertig sein. Als Beispiele seien Pelargonsäure, Palmitinsäure, Laurinsäure, Margarinsäure, Dodecandisäure, Behensäure und besonders bevorzugt Stearinsäure, Caprinsäure sowie Montansäure (Mischung von Fettsäuren mit 30 bis 40 C-Atomen), Linolsäure, Linolensäure und Eleostearinsäure, Ölsäure genannt.

Die aliphatischen Alkohole können 1- bis 4-wertig sein. Beispiele für Alkohole sind n-Butanol, n-Octanol, Stearylalkohol, Ethylenglykol, Propylenglykol, Neopentylglykol, Pentaerythrit, Myricylalkohol, Cetylalkohol, wobei Glycerin bevorzugt ist.

Es können auch Mischungen verschiedener Ester und/oder Öle eingesetzt werden.

Bevorzugt enthält die Komponente B) ungesättigte Fettsäureanteile, entsprechend einer Jodzahl (gemäß DIN 53995) von 130 bis 180 und insbesondere von 120 bis 200 mg Jod pro Gramm Substanz.

Die Einführung der Epoxidfunktion in die vorstehend genannten Öle oder/und Ester erfolgt über Reaktion dieser mit epoxidierenden Agentien z.B. Persäuren wie Peressigsäure. Derartige Umsetzungen sind dem Fachmann bekannt, weshalb sich weitere Angaben hierzu erübrigen.

Als Komponente C) enthalten die erfindungsgemäß verwendbaren Formmassen 1 bis 20, vorzugsweise 1 bis 15 und insbesondere 5 bis 15 Gew.-%, bezogen auf A) bis E), eines Phosphinsäuresalzes.

Als Komponente C) eignen sich Metallsalze von Phosphinsäuren der Formel 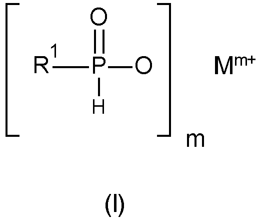 wobei
- R¹: Wasserstoff, Phenyl, Methyl, Ethyl, Propyl, Butyl, Pentyl, Octyl, Phenyl oder 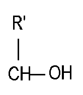
- R' =: Wasserstoff, Phenyl, Tolyl,
- M: Mg, Ca, Al, Zn,
- m: 1-4
bedeuten.

Bevorzugt ist R¹ der Komponente C) Methyl, Ethyl, n-Propyl, Iso-Propyl, n-Butyl, tert.-Butyl, n-Pentyl, Octyl und/oder Phenyl.
Besonders bevorzugt ist R¹ Wasserstoff, Methyl, Ethyl und M = Al, Mg, Ca, Zn, wobei Alhypophosphit besonders bevorzugt ist.

Die Herstellung der Phosphinate erfolgt vorzugsweise durch Ausfällen der entsprechenden Metallsalze aus wässrigen Lösungen. Die Phosphinate können jedoch auch in Gegenwart eines geeigneten anorganischen Metalloxids oder -sulfids als Trägermaterials (Weißpigmente, wie z.B. TiO₂, SnO₂, ZnO, ZnS, SiO₂) gefällt werden.

Als Komponente D) enthalten die erfindungsgemäß verwendbaren Formmassen 1 bis 20, vorzugsweise 1 bis 15 und insbesondere 5 bis 15 Gew.-% einer Melaminverbindung.

Das gemäß der Erfindung (Komponente D) bevorzugt geeignete Melamincyanurat ist ein Reaktionsprodukt aus vorzugsweise äquimolaren Mengen von Melamin (Formel I) und Cyanursäure bzw. Isocyanursäure (Formeln la und Ib)

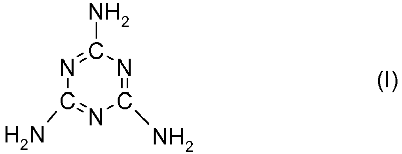

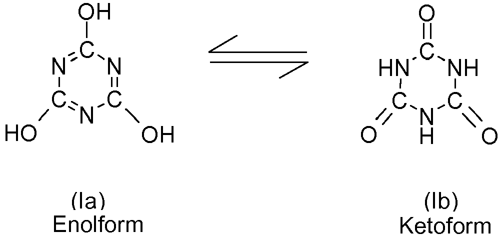

Man erhält es z.B. durch Umsetzung von wässrigen Lösungen der Ausgangsverbindungen bei 90 bis 100°C. Das im Handel erhältliche Produkt ist ein weißes Pulver mit einer mittleren Korngröße d₅₀ von 1,5 - 7 µm und einem d₉₉ Wert kleiner 50µm.

Weitere geeignete Verbindungen (oft auch als Salze oder Addukte bezeichnet) sind Melaminsulfat, Melamin, Melaminborat, -oxalat, -phosphat prim., -phosphat sec. und -pyrophosphat sec., Neopentylglycolborsäuremelamin sowie polymeres Melaminphosphat (CAS-Nr 56386-64-2 bzw. 218768-84-4).

Als Komponente E) können die erfindungsgemäß verwendbaren Formmassen 0 bis 60, insbesondere bis zu 50 Gew.- % weiterer Zusatzstoffe enthalten.

Als Komponente E) können auch Ethylencopolymere, Ethylen-Propylencopolymere, Polyesterelastomere oder thermoplastische Polyurethane eingesetzt werden (sog. Kautschuke) in Mengen bis zu 25 Gew.-%.

Ganz allgemein handelt es sich dabei um Copolymerisate die bevorzugt aus mindestens zwei der folgenden Monomeren aufgebaut sind: Ethylen, Propylen, Isobuten, Chloropren, Vinylacetat, Styrol, Acrylnitril und Acryl- bzw. Methacrylsäureester mit 1 bis 18 C-Atomen in der Alkoholkomponente.

Derartige Polymere werden z.B. in Houben-Weyl, Methoden der organischen Chemie, Bd. 14/1 (Georg-Thieme-Verlag, Stuttgart, 1961), Seiten 392 bis 406 und in der Monographie von C.B.

Bucknall, "Toughened Plastics" (Applied Science Publishers, London, 1977) beschrieben. Bevorzugt sind MSA modifizierte Ethylenacrylatcopolymere.

Als Komponente E) können die erfindungsgemäßen Formmassen 0 bis 5, vorzugsweise 0,05 bis 3 und insbesondere 0,1 bis 2 Gew.-% mindestens eines Esters oder Amids gesättigter oder ungesättigter aliphatischer Carbonsäuren mit 10 bis 40, bevorzugt 16 bis 22 C-Atomen mit aliphatischen gesättigten Alkoholen oder Aminen mit 2 bis 40, vorzugsweise 2 bis 6 C-Atomen enthalten.

Die Carbonsäuren können 1- oder 2-wertig sein. Als Beispiele seien Pelargonsäure, Palmitinsäure, Laurinsäure, Margarinsäure, Dodecandisäure, Behensäure und besonders bevorzugt Stearinsäure, Caprinsäure sowie Montansäure (Mischung von Fettsäuren mit 30 bis 40 C-Atomen) genannt.
Die aliphatischen Alkohole können 1- bis 4-wertig sein. Beispiele für Alkohole sind n-Butanol, n-Octanol, Stearylalkohol, Ethylenglykol, Propylenglykol, Neopentylglykol, Pentaerythrit, wobei Glycerin und Pentaerythrit bevorzugt sind.

Die aliphatischen Amine können 1- bis 3-wertig sein. Beispiele hierfür sind Stearylamin, Ethylendiamin, Propylendiamin, Hexamethylendiamin, Di(6-Aminohexyl)amin, wobei Ethylendiamin und Hexamethylendiamin besonders bevorzugt sind. Bevorzugte Ester oder Amide sind entsprechend Glycerindistearat, Glycerintristearat, Ethylendiamindistearat, Glycerinmonopalmitat, Glycerintrilaurat, Glycerinmonobehenat und Pentaerythrittetrastearat.

Es können auch Mischungen verschiedener Ester oder Amide oder Ester mit Amiden in Kombination eingesetzt werden, wobei das Mischungsverhältnis beliebig ist.

Als faser- oder teilchenförmige Füllstoffe E) seien Kohlenstofffasern, Glasfasern, Glaskugeln, amorphe Kieselsäure, Asbest, Calciumsilicat, Calciummetasilicat, Magnesiumcarbonat, Kaolin, Kreide, gepulverter Quarz, Glimmer, Bariumsulfat und Feldspat genannt, die in Mengen bis zu 60 Gew.-%, insbesondere bis zu 50 % eingesetzt werden.

Als bevorzugte faserförmige Füllstoffe seien Kohlenstofffasern, Aramid-Fasern und Kaliumtitanat-Fasern genannt, wobei Glasfasern als E-Glas besonders bevorzugt sind. Diese können als Mahlglas Rovings oder Schnittglas in den handelsüblichen Formen eingesetzt werden.

Die faserförmigen Füllstoffe können zur besseren Verträglichkeit mit den Thermoplasten mit einer Silanverbindung oberflächlich vorbehandelt sein.

Geeignete Silanverbindungen sind solche der allgemeinen Formel

(X-(CH₂)ₙ)ₖ-Si-(O-CₘH₂ₘ₊₁)₄₋ₖ

in der die Substituenten folgende Bedeutung haben: 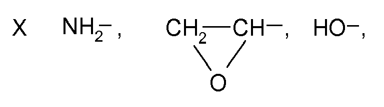
- n: eine ganze Zahl von 2 bis 10, bevorzugt 3 bis 4
- m: eine ganze Zahl von 1 bis 5, bevorzugt 1 bis 2
- k: eine ganze Zahl von 1 bis 3, bevorzugt 1

Bevorzugte Silanverbindungen sind Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten.

Die Silanverbindungen werden im allgemeinen in Mengen von 0,05 bis 5, vorzugsweise 0,5 bis 1,5 und insbesondere 0,8 bis 1 Gew.-% (bezogen auf E) zur Oberflächenbeschichtung eingesetzt.

Geeignet sind auch nadelförmige mineralische Füllstoffe.

Unter nadelförmigen mineralischen Füllstoffen wird im Sinne der Erfindung ein mineralischer Füllstoff mit stark ausgeprägtem nadelförmigen Charakter verstanden. Als Beispiel sei nadelförmiger Wollastonit genannt. Vorzugsweise weist das Mineral ein L/D (Länge Durchmesser)-Verhältnis von 8 : 1 bis 35 : 1, bevorzugt von 8 : 1 bis 11 : 1 auf. Der mineralische Füllstoff kann gegebenenfalls mit den vorstehend genannten Silanverbindungen vorbehandelt sein; die Vorbehandlung ist jedoch nicht unbedingt erforderlich.

Als weitere Füllstoffe seien Kaolin, calciniertes Kaolin, Talkum und Kreide genannt.
Als Komponente F können die erfindungsgemäßen thermoplastischen Formmassen übliche Verarbeitungshilfsmittel wie Stabilisatoren, Oxidationsverzögerer, Mittel gegen Wärmezersetzung und Zersetzung durch ultraviolettes Licht, Gleit- und Entformungsmittel, Färbemittel wie Farbstoffe und Pigmente, Keimbildungsmittel, Weichmacher usw. enthalten.

Als Beispiele für Oxidationsverzögerer und Wärmestabilisatoren sind sterisch gehinderte Phenole und/oder Phosphite, Hydrochinone, aromatische sekundäre Amine wie Diphenylamine, verschiedene substituierte Vertreter dieser Gruppen und deren Mischungen in Konzentrationen bis zu 1 Gew.-%, bezogen auf das Gewicht der thermoplastischen Formmassen genannt.

Als UV-Stabilisatoren, die im allgemeinen in Mengen bis zu 2 Gew.-%, bezogen auf die Formmasse, verwendet werden, seien verschiedene substituierte Resorcine, Salicylate, Benzotriazole und Benzophenone genannt.

Als Umesterungsstabilisatoren seien Irgaphos® PEPQ sowie Phosphate (z.B. Monozinkphosphat) genannt.

Es können anorganische Pigmente, wie Titandioxid (Rutil- oder Anatastypen), Ultramarinblau, Eisenoxid ZnO, ZrO₂, SnO₂, ZnS, und Ruß, weiterhin organische Pigmente, wie Phthalocyanine, Chinacridone, Perylene sowie Farbstoffe, wie Nigrosin und Anthrachinone als Farbmittel zugesetzt werden.

Als Keimbildungsmittel können Natriumphenylphosphinat, Aluminiumoxid, Siliziumdioxid sowie bevorzugt Talkum eingesetzt werden.

Weitere Gleit- und Entformungsmittel werden üblicherweise in Mengen bis zu 1 Gew.-% eingesetzt. Es sind bevorzugt langkettige Fettsäuren (z.B. Stearinsäure oder Behensäure), deren Salze (z.B. Ca- oder Zn-Stearat) oder Montanwachse (Mischungen aus geradkettigen, gesättigten Carbonsäuren mit Kettenlängen von 28 bis 32 C-Atomen) sowie Ca- oder Na-Montanat sowie niedermolekulare Polyethylen- bzw. Polypropylenwachse.

Als Beispiele für Weichmacher seien Phthalsäuredioctylester, Phthalsäuredibenzylester, Phthalsäurebutylbenzylester, Kohlenwasserstofföle, N-(n-Butyl)benzolsulfonamid genannt.

Die erfindungsgemäßen Formmassen können noch 0 bis 2 Gew.-% fluorhaltige Ethylenpolymerisate enthalten. Hierbei handelt es sich um Polymerisate des Ethylens mit einem Fluorgehalt von 55 bis 76 Gew.-%, vorzugsweise 70 bis 76 Gew.-%.

Beispiele hierfür sind Polytetrafluorethylen (PTFE), Tetrafluorethylenhexafluorpropylen-Copolymere oder Tetrafluorethylen-Copolymerisate mit kleineren Anteilen (in der Regel bis zu 50 Gew.-%) copolymerisierbarer ethylenisch ungesättigter Monomerer. Diese werden z.B. von Schildknecht in "Vinyl and Related Polymers", Wiley-Verlag, 1952, Seite 484 bis 494 und von Wall in "Fluorpolymers" (Wiley Interscience, 1972) beschrieben.

Diese fluorhaltigen Ethylenpolymerisate liegen homogen verteilt in den Formmassen vor und weisen bevorzugt eine Teilchengröße d₅₀ (Zahlenmittelwert) im Bereich von 0,05 bis 1 µm, insbesondere von 0,1 bis 5 µm auf. Diese geringen Teilchengrößen lassen sich besonders bevorzugt durch Verwendung von wässrigen Dispersionen von fluorhaltigen Ethylenpolymerisaten und deren Einarbeitung in eine Polyesterschmelze erzielen.

Die erfindungsgemäßen thermoplastischen Formmassen können nach an sich bekannten Verfahren hergestellt werden, indem man die Ausgangskomponenten in üblichen Mischvorrichtungen wie Schneckenextrudern, Brabender-Mühlen oder Banbury-Mühlen mischt und anschließend extrudiert. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden. Die Mischtemperaturen liegen in der Regel bei 230 bis 290°C.

Nach einer weiteren bevorzugten Arbeitsweise können die anderen Komponenten mit einem Polyesterpräpolymeren gemischt, konfektioniert und granuliert werden. Das erhaltene Granulat wird in fester Phase anschließend unter Inertgas kontinuierlich oder diskontinuierlich bei einer Temperatur unterhalb des Schmelzpunktes der Komponente A) bis zur gewünschten Viskosität kondensiert.

Die erfindungsgemäßen thermoplastischen Formmassen zeichnen sich durch eine gute Verarbeitung und gute thermische Stabilität bei gleichzeitig guter Mechanik aus. Insbesondere die Verarbeitungsstabilität bei hohen Temperaturen und die Witterungsbeständigkeit ist signifikant verbessert.

Diese eignen sich zur Herstellung von Fasern, Folien und Formkörpern jeglicher Art, insbesondere für Anwendungen als Stecker, Schalter, Gehäuseteile, Gehäusedeckel, Scheinwerferhintergrund (Bezel), Brausenkopf, Armaturen, Bügeleisen, Drehschalter, Herdknöpfe, Friteusendeckel, Türgriffe, (Rück-)spiegelgehäuse, (Heck-)scheibenwischer, Lichtwellenleiterummantelungen.

Im E/E-Bereich können mit den erfindungsgemäßen Polyestern Stecker, Steckerteile, Steckverbinder, Kabelbaumkomponenten, Schaltungsträger, Schaltungsträgerkomponenten, dreidimensional spritzgegossene Schaltungsträger, elektrische Verbindungselemente, mechatronische Komponenten oder optoelektronische Bauelemente hergestellt werden.

Im Auto-Innenraum ist eine Verwendung für Armaturentafeln, Lenkstockschalter, Sitzteile, Kopfstützen, Mittelkonsolen, Getriebe-Komponenten und Türmodule, im Auto-Außenraum für Türgriffe, Frontscheinwerferkomponenten, Außenspiegelkomponenten, Scheibenwischerkomponenten, Scheibenwischerschutzgehäuse, Ziergitter, Dachreling, Schiebedachrahmen sowie Karosserieaußenteile möglich.

Für den Küchen- und Haushaltsbereich ist der Einsatz der Polyester zur Herstellung von Komponenten für Küchengeräte, wie z.B. Friteusen, Bügeleisen, Knöpfe, sowie Anwendungen im Garten-Freizeitbereich, z.B. Komponenten für Bewässerungssysteme oder Gartengeräte möglich.

### Beispiele

### Komponente A:

Polybutylenterephthalat mit einer Viskositätszahl VZ von 107 ml/g und einem Carboxylendgruppengehalt von 34 mval/kg (Ultradur® B 2550 der BASF SE) (VZ gemessen in 0,5 gew.-%iger Lösung aus Phenol/o-Dichlorbenzol), 1:1-Mischung bei 25°C gemäß DIN 53728/ISO.

### Komponente B:

Epoxidiertes Leinöl (Epoxidgehalt: ca. 9 Gew.-%. Vikoflex 7190 der Firma Arkema EEW = 174 g/Eq.

### Komponente C:

Al- hypophosphit

### Komponente C/V:

Al-Diethylphosphinat

### Komponente D/1:

Melamincyanurat einer mittleren Teilchengröße von ∼2.6 µm (es wurde Melapur® MC 25 der BASF SE verwendet).

### Komponente D/2

Melaminpolyphosphat

### Komponente E/1:

Standard Schnittglasfaser für Polyester einer mittleren Dicke von 10 µm.

### Komponente: E 21 / E 22 / E 23

Mischung (0,3 + 0,5 Gew.-%) aus einem oxidierten Polyethylenwachs (Säurezahl: 15-19 mg KOH/g), Pentaerythrittetrastearat und 1.0 Gew.-% Polypropylenhomopolymer (MFR = 25 g/10 Min. bei 230 °C / 2,16 kg Belastung gemäß ISO 1133).

### Komponente E/3:

Handelsübliche Epoxidharz auf Basis Bisphenol-A (Araldit GT7077 der Firma Huntsman) EEW = 1490-1640 g/Eq.

### Komponente E/4:

Handelsüblicher Ruß (es wurde Spezialschwarz IV der Firma Orion Engineered Carbons GmbH verwendet).

### Herstellung der Formmassen/Prüfkörper

Zum Nachweis des erfindungsgemäß beschriebenen Prozesses zur Herstellung hydrolysestabiler, halogenfrei flammgeschützter Polyesterformkörpern wurden durch Compoundierung entsprechende Kunststoff-Formmassen angefertigt. Die einzelnen Komponenten wurden hierzu in einem Zweiwellenextruder ZSK 26 (Fa. Berstorff) bei einem Durchsatz von 20 kg/h und ca. 240-270 °C bei flachem Temperaturprofil gemischt, als Strang ausgetragen, bis zur Granulierfähigkeit abgekühlt und granuliert. Die Prüfkörper für die in Tabelle 2 angeführten Untersuchungen wurden auf einer Spritzgießmaschine des Typs Arburg 420C bei einer Massetemperatur von ca. 260 °C und einer Werkzeugtemperatur von ca. 80 °C verspritzt.

Die Summe der Anteile der Komponenten A) bis E) in Tabelle 1 (Vergleichsbeispiel = V1, V2, V3 erfindungsgemäßes Beispiel = E1) ergänzen sich zu 100 Gew.-%. Die Zusammensetzungen der Formmassen und die Ergebnisse der Messungen sind den Tabellen zu entnehmen.

**Tabelle 1**

| Komponenten [Gew.-%] | V1 | V2 | V3 | V4 | E1 |
|---|---|---|---|---|---|
| A | 53.15 | 51.15 | 54.2 | 47.15 | 47.15 |
| B | - | - | - | 3.00 | 4.00 |
| C | 12.6 | 12.6 | 12.6 | - | 12.6 |
| C/V | - | - | - | 15 | - |
| D/2 | - | - | - | 4.50 | - |
| D/1 | 7.40 | 7.40 | 7.4 | 3.00 | 7.40 |
| E/1 | 25.0 | 25.0 | 25.0 | 25.0 | 25.0 |
| E21/E22/E23 | 1.80 | 1.80 | 0.80 | 0.80 | 1.80 |
| E/3 | - | 2.00 | - | 1.00 | 2.00 |
| E/4 | 0.05 | 0.05 | - | - | 0.05 |

Die Prüfkörper für die Spannungstests wurden nach ISO 527-2: / 1993 hergestellt.

Die MVR Messungen wurden nach ISO 1133 durchgeführt.

Die Flammwidrigkeit der Formmassen wurde zum einen nach der Methode UL94-V (Underwriters Laboratories Inc. Standard of Safety,"Test for Flammability of Plastic for Parts in Devices and Appliances", S. 14 bis S. 18 Northbrook 1998) bestimmt.

Die Glühdrahtbeständigkeit GWFI (Glow-Wire-Flammability-Index) an Platten wurde nach IEC 60695-2-12 durchgeführt. Der GWFI ist eine generelle Eignungsprüfung für Kunststoffe im Kontakt mit spannungsführenden Teilen. Ermittelt wird die höchste Temperatur, in der in 3 aufeinander folgende Tests eine der folgenden Bedingungen erfüllt ist: (a) keine Entzündung der Probe oder (b) Nachbrennzeit oder Nachglühzeit ≤ 30 s nach Ende der Einwirkzeit des Glühdrahtes und keine Entzündung der Unterlage.

Die Wärmelagerung der Probekörper im Wasserdampf (Hydrolysetest) wurde bei 110 °C/100 % Feuchte im Autoklaven durchgeführt. Hierzu wurde das Probenmaterial in separaten Prüfgefäßen unter Zusatz von Wasser jeweils für 4 und 8 Tage in einem Autoklaven auf 110 °C erhitzt. Nach den entsprechenden Intervallen wurden die Prüfkörper entnommen, abgetrocknet und der entsprechenden Prüfung unterzogen.

Die Spannungsrissbeständigkeit gegenüber 10 %-iger Natronlauge wurde bei Raumtemperatur durchgeführt. Hierzu wurden Zugstäbe (hergestellt nach ISO 527-2:/1993 unter 2 % Randfaserdehnung in ein Metallgestell eingespannt und der mittlere Teil des Prüfkörpers mit 10 %-iger Natronlauge bepinselt. Nach 10 Minuten Einwirkdauer wurden die Proben mit einem Tuch gereinigt und erneut benetzt. Dieser Vorgang wurde insgesamt 5 mal wiederholt. Anschließend wurden die Proben ein letztes Mal bepinselt und bei Raumtemperatur gelagert und nach 24 Stunden 2 und 4 Wochen visuell beurteilt.

**Tabelle 2**

| Werte ungelagert | V1 | V2 | V3 | V4 | E1 |
|---|---|---|---|---|---|
| VZ /[ml/g] | 99 | 108 | 97 | 81 | 105 |
| MVR 275/2.16 [ccm/10 min] | 21.0 | 18.0 | 29.0 | 62.0 | 24.0 |
| Zug E-Modul [MPa] | 10200 | 10400 | 10300 | 9280 | 8550 |
| Bruchspannung [MPa] | 122 | 130 | 119 | 90.3 | 119 |
| Bruchdehnung [%] | 2.2 | 2.1 | 2.2 | 1.5 | 2.5 |
| UL94 (1.6 mm) | V-0 | V-0 | V-0 | V-0 | V-0 |
| GWFI 960°C / 1.0mm | Bestan standen | Bestanden | Bestanden | Bestanden | Bestanden |
| Werte nach 4 Tagen gelagert bei 110°C/100% Luftfeuchte | | | | | |
| VZ /[ml/g] | 73 | 83 | 54 | 47 | 96 |
| Zug E-Modul [MPa] | 9100 | 9500 | 9200 | 8390 | 8050 |
| Bruchspannung [MPa] | 70 | 76 | 49 | 54 | 96 |
| Bruchdehnung [%] | 1.0 | 1.1 | 0.6 | 0.9 | 2.1 |
| Werte nach 8 Tagen gelagert bei 110°C/100% Luftfeuchte | | | | | |
| VZ /[ml/g] | 49 | 60 | 35 | 34 | 73 |
| Zug E-Modul [MPa] | 8850 | 9100 | 7900 | 7160 | 7800 |
| Bruchspannung [MPa] | 41 | 41 | 29 | 35 | 76 |
| Bruchdehnung [%] | 0.5 | 0.5 | 0.5 | 0.7 | 1.3 |
| | | | | | |
| Spannungsrißbeständigkeit gegenüber 10%-iger Natronlauge bei 2% Randfaserdehnung | Große Spannungsrisse, Bruch nach 5 h | Kleine Spannungsrisse, kein Bruch nach 2 Wochen | Große Spannungsrisse, Bruch nach 17 h | - | Keine Spannungsrisse, kein Bruch nach 4 Wochen |

Anhand der Daten von Tabelle 2 geht hervor, dass die erfindungsgemäße Polyesterformmasse eine sehr gute Hydrolysestabilität aufweist (hohe VZ Werte nach Lagerung im feucht/warm-Klima im Vergleich zu den Vergleichsversuchen). Darüber hinaus besitzt die Formmasse eine hervorragende Spannungsrissbeständigkeit gegenüber Laugen. Die Flammwidrigkeit und das Verarbeitungsverhalten (MVR-Werte) hingegen werden durch Zusatz der erfindungsgemäßen Additive keineswegs negativ beeinflusst.

## Patentansprüche

1. Verwendung von Polyesterformmassen, aufgebaut aus
A) 20 bis 97,9 Gew.-% eines thermoplastischen Polyesters
B) 0,1 bis 10 Gew.-% eines epoxidierten natürlichen Öls oder Fettsäureester oder deren Mischungen, wobei die Komponente B) ein Epoxid-Äquivalentgewicht gemäß DIN EN ISO 3001 von 100 bis 400 g/Eq. aufweist.
C) 1 bis 20 Gew.-% eines Metallsalzes einer Phosphinsäure,
D) 1 bis 20 Gew.-% einer Melaminverbindung
E) 0 bis 60 Gew.-% weiterer Zusatzstoffe
wobei die Summe der Gewichtsprozente der Komponenten A) bis E) 100 % ergibt, zur Herstellung von spannungsrissbeständigen und halogenfreien flammgeschützten Polyesterformmassen.

2. Verwendung nach Anspruch 1, in denen die Komponente B) einen Gehalt von 1 bis 20 Gew.-% an Epoxidgruppen aufweisen.

3. Verwendung nach den Ansprüchen 1 oder 2, in denen die Epoxidgruppen der Komponente B) nicht terminal gebunden sind.

4. Verwendung nach den Ansprüchen 1 bis 3, wobei die Komponente B) aus epoxidiertem Olivenöl, Leinöl, Sojabohnenöl, Palmöl, Erdnussöl, Kokosnussöl, Tungöl, Lebertran oder deren Mischungen aufgebaut ist.

5. Verwendung nach den Ansprüchen 1 bis 4, wobei die epoxidierten Fettsäureester B) aus gesättigten oder ungesättigten aliphatischen Carbonsäuren mit 10 bis 40 C-Atomen mit aliphatischen gesättigten Alkoholen mit 2 bis 40 C-Atomen aufgebaut sind.

6. Verwendung nach den Ansprüchen 1 bis 5, wobei die Komponente C) aufgebaut ist aus mindestens einem Metallsalz einer Phosphinsäure der Formel 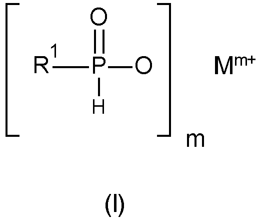 wobei
R¹ Wasserstoff, Phenyl, Methyl, Ethyl, Propyl, Butyl, Pentyl, Octyl, Phenyl oder 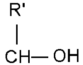
R' = Wasserstoff, Phenyl, Tolyl,
M Mg, Ca, Al, Zn,
m 1-4
bedeuten.

7. Spannungsrissbeständige flammgeschützte Formkörper, Fasern und Folien erhältlich gemäß den Verwendungsansprüchen 1 bis 6.

8. Spritzgussformkörper, beschichtete Formkörper, Formkörper für elektrische und elektronische Verwendungen, KFZ-Bauteile, erhältlich gemäß den Verwendungsansprüchen 1 bis 6.

## Claims

1. The use of polyester molding compositions composed of
A) from 20 to 97.9% by weight of a thermoplastic polyester
B) from 0.1 to 10% by weight of an epoxidized natural oil or fatty acid ester, or mixture of these, where the epoxide equivalent weight of component B) in accordance with DIN EN ISO 3001 is from 100 to 400 g/eq
C) from 1 to 20% by weight of a metal salt of a phosphinic acid
D) from 1 to 20% by weight of a melamine compound
E) from 0 to 60% by weight of other additional substances,
where the total of the percentages by weight of components A) to E) is 100%, for the production of stress-cracking-resistant and halogen-free flame-retardant polyester molding compositions.

2. The use according to claim 1, where the content of epoxy groups in component B) is from 1 to 20% by weight.

3. The use according to claim 1 or 2, where the epoxy groups in component B) are not terminal.

4. The use according to claims 1 to 3, where component B) is composed of epoxidized olive oil, linseed oil, soybean oil, palm oil, groundnut oil, coconut oil, tung oil, cod liver oil, or a mixture of these.

5. The use according to claims 1 to 4, where the epoxidized fatty acid esters B) are composed of saturated or unsaturated aliphatic carboxylic acids having from 10 to 40 carbon atoms with saturated aliphatic alcohols having from 2 to 40 carbon atoms.

6. The use according to claims 1 to 5, where component C) is composed of at least one metal salt of a phosphinic acid of the formula 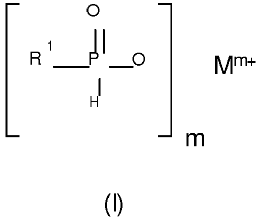 where
R¹ = hydrogen, phenyl, methyl, ethyl, propyl, butyl, pentyl, octyl, phenyl, or 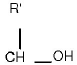
R' = hydrogen, phenyl, tolyl,
M = Mg, Ca, Al, Zn,
M = from 1 to 4.

7. A stress-cracking-resistant flame-retardant molding, fiber, or foil obtainable according to the use claims 1 to 6.

8. An injection molding, coated molding, molding for electrical and electronic uses, or motor-vehicle component, obtainable according to use claims 1 to 6.

## Revendications

1. Utilisation de matériaux de moulage polyester, formés par :
A) 20 à 97,9 % en poids d'un polyester thermoplastique,
B) 0,1 à 10 % en poids d'une huile naturelle époxydée ou d'un ester d'acide gras ou leurs mélanges, le composant B) présentant un poids équivalent d'époxyde selon DIN EN ISO 3001 de 100 à 400 g/éq.,
C) 1 à 20 % en poids d'un sel métallique d'un acide phosphinique,
D) 1 à 20 % en poids d'un composé de mélamine,
E) 0 à 60 % en poids d'additifs supplémentaires,
la somme des pourcentages en poids des composants A) à E) étant de 100 %, pour la fabrication de matériaux de moulage polyester ignifugés résistants aux fissures de contrainte et sans halogène.

2. Utilisation selon la revendication 1, dans laquelle le composant B) présente une teneur de 1 à 20 % en poids en groupes époxyde.

3. Utilisation selon la revendication 1 ou 2, dans laquelle les groupes époxyde du composant B) ne sont pas reliés aux extrémités.

4. Utilisation selon les revendications 1 à 3, dans laquelle le composant B) est formé à partir d'huile d'olive, d'huile de lin, d'huile de soja, d'huile de palme, d'huile d'arachide, d'huile de coco, d'huile de tung, d'huile de foie de morue époxydée ou leurs mélanges.

5. Utilisation selon les revendications 1 à 4, dans laquelle les esters d'acides gras époxydés B) sont formés à partir d'acides carboxyliques aliphatiques saturés ou insaturés de 10 à 40 atomes C avec des alcools aliphatiques saturés de 2 à 40 atomes C.

6. Utilisation selon les revendications 1 à 5, dans laquelle le composant C) est formé à partir d'au moins un sel métallique d'un acide phosphinique de formule 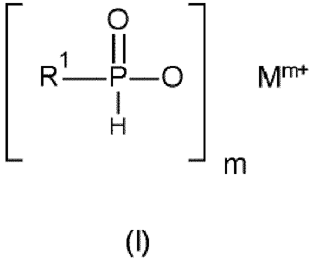 dans laquelle
R¹ signifie hydrogène, phényle, méthyle, éthyle, propyle, butyle, pentyle, octyle, phényle ou 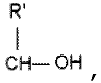
R' signifie hydrogène, phényle, tolyle,
M signifie Mg, Ca, Al, Zn,
m signifie 1 à 4

7. Corps moulés, fibres et films ignifugés résistants aux fissures de contrainte, pouvant être obtenus selon les revendications d'utilisation 1 à 6.

8. Corps moulés par injection, corps moulés revêtus, corps moulés pour utilisations électriques et électroniques, composants automobiles, pouvant être obtenus selon les revendications d'utilisation 1 à 6.
